# EUROPÄISCHE PATENTANMELDUNG

(11) **EP 4 345 428 A1**
(43) Veröffentlichungstag der Anmeldung: **03.04.2024**
(21) Anmeldenummer: 23193967.9
(22) Anmeldetag: 29.08.2023
(51) Int. Cl.: G01J 5/00, G01J 5/53, F24C 7/08, G01J 5/80

(54) **VERFAHREN ZUM KALIBRIEREN EINES VERSCHMUTZTEN INFRAROTSENSORS, VERFAHREN ZUM MESSEN EINER TEMPERATUR MIT EINEM VERSCHMUTZTEN INFRAROTSENSOR SOWIE KÜCHENGERÄT**

(30) Priorität: 29.09.2022 DE 102022125162; 30.09.2022 BE 202205784
(71) Anmelder: Miele & Cie. KG, 33332 Gütersloh (DE)
(72) Erfinder: Warkentin, Michelle, 33106 Paderborn (DE); Scharmann, Jürgen, 33442 Herzebrock-Clarholz (DE); Michl, Bastian, 34466 Wolfhagen (DE)

(57) **Zusammenfassung**

Die Erfindung betrifft ein Verfahren zum Kalibrieren wenigstens eines Messwerts eines Infrarotsensors (5) in einem Küchengerät (1) mit einem Garraum (3). Der Garraum umfasst einen Infrarotsensor (5), der durch eine verschmutzbare Schutzscheibe (7) von einem inneren Bereich (9) des Garraums (3) getrennt ist. Der Garraum (3) weist ein Kalibrierelement (27) mit einem vorbekannten Sollwert einer Oberflächentemperatur und einem vorbekannten Emissionsgrad zur Kalibrierung einer vom Infrarotsensor (5) gemessenen Oberflächentemperatur auf. Das erfindungsgemäße Kalibrierverfahren umfasst die Schritte: Messen wenigstens eines Messwertes einer Oberflächentemperatur des Kalibrierelements (27) mit Hilfe des Infrarotsensors (5); Bestimmen einer Abweichung zwischen dem wenigstens einen Messwert der Oberflächentemperatur des Kalibrierelements (27) und dem vorbekannten Sollwert der Oberflächentemperatur des Kalibrierelements (27), und Korrigieren des wenigstens einen Messwerts der Oberflächentemperatur um die Höhe der bestimmten Abweichung auf Basis wenigstens zweier oder mehr der folgenden Werte: dem wenigstens einen Messwert der Oberflächentemperatur des Kalibrierelements (27), dem vorbekannten Sollwert der Oberflächentemperatur des Kalibrierelements (27) und dem vorbekannten Emissionsgrad des Kalibrierelements (27). Die Erfindung betrifft zudem ein Küchengerät sowie ein Messverfahren zur Messung einer Temperatur.

## Beschreibung

Die Erfindung betrifft ein Verfahren zum Kalibrieren eines Messwerts eines Infrarotsensors in einem Küchengerät mit einem Garraum, ein Küchengerät sowie ein Verfahren zum Messen einer Oberflächentemperatur mit oder in einem Küchengerät mit einem Infrarotsensor mit einer verschmutzten Schutzscheibe.

Bei der Zubereitung von Speisen, insbesondere in einem Garraum von Küchengeräten ist häufig eine Messung der Oberflächentemperatur der zubereiteten Speisen während eines Garvorgangs gewünscht. Damit ist es z.B. möglich, Betriebsparameter des Küchengeräts während des Garvorgangs entsprechend der gemessenen Oberflächentemperatur der Speisen anzupassen. Im Ergebnis kann somit die Qualität des Garvorgangs und der zubereiteten Speisen deutlich verbessert werden.

Typischerweise wird zu Messung der Oberflächentemperatur der Speisen ein Infrarotsensor verwendet. Der Infrarotsensor ist häufig durch eine Schutzscheibe vor einer direkten Verschmutzung geschützt. Die Schutzscheibe ist dabei ein Element, welches für Infrarotstrahlung, die zur Messung der Temperatur verwendet wird, transparent bzw. zumindest teilweise durchlässig ist. Während des Garvorgangs kann jedoch die Schutzscheibe (bzw. der Infrarotsensor im Fall keiner vorhandenen Schutzscheibe) z.B. durch Fettspritzer oder aufsteigende Fettwrasen verschmutzen. Fettspritzer und Fettwrasen entstehen durch Fett aus den im Garraum zubereiteten Speisen. Die Folge einer Verschmutzung des Infrarotsensors ist ein Fehler bei der Messung der Oberflächentemperatur. Der Grund ist eine Änderung der Transmission durch die Verschmutzung auf der Schutzscheibe durch Absorption eines Teils des Infrarotlichts in der Verschmutzung auf der Schutzscheibe. Die mit Hilfe des (mittelbar durch die Schutzscheibe verschmutzten) Infrarotsensors bestimmte Oberflächentemperatur wird dabei typischerweise zu niedrig bestimmt. Ein Nachregeln von Betriebsparametern des Küchengeräts kann dann zu einem unerwünschten Ergebnis und einem Misserfolg des Garvorgangs führen.

Im Stand der Technik sind bewegliche Shutter bekannt, die den Sensor abdecken, wenn er gerade nicht misst. Alternativ sind auch besondere Optiken bekannt, die eine Verschmutzung des Infrarotsensors verhindern bzw. reduzieren. Im Stand der Technik findet eine Kalibrierung der Messwerte des Infrarotsensors lediglich einmal initial statt.

Die Erfindung stellt sich somit die Aufgabe, eine korrekte Temperaturmessung auch bei einem verschmutzen Infrarotsensor zu ermöglichen. Die Erfindung stellt sich ebenfalls die Aufgabe, die Messung der Oberflächentemperatur von Objekten im Garraum des Küchengeräts zu verbessern und entstehende Messfehler zu korrigieren.

Dieses Problem wird in einem ersten Aspekt der Erfindung durch ein Verfahren zum Kalibrieren wenigstens eines Messwerts eines Infrarotsensors in einem Küchengerät mit einem Garraum mit den Merkmalen des Patentanspruchs 1 gelöst. In einem zweiten Aspekt der Erfindung wird dieses Problem durch ein Küchengerät mit den Merkmalen des Patentanspruchs 13 gelöst. In einem dritten Aspekt der Erfindung wird dieses Problem durch ein Verfahren zum Messen einer Oberflächentemperatur mit den Merkmalen des Patentanspruchs 15 gelöst. Vorteilhafte Ausgestaltungen und Weiterbildungen der Erfindung ergeben sich aus den nachfolgenden Unteransprüchen.

In einem ersten Aspekt der Erfindung wird das Problem gemäß Anspruch 1 durch ein Verfahren zum Kalibrieren wenigstens eines Messwerts eines Infrarotsensors in einem Küchengerät mit einem Garraum gelöst, wobei der Garraum einen Infrarotsensor aufweist, der durch eine verschmutzbare Schutzscheibe von einem inneren Bereich des Garraums getrennt ist, wobei der Garraum ein Kalibrierelement mit einem vorbekannten Sollwert einer Oberflächentemperatur und einem vorbekannten Emissionsgrad zur Kalibrierung einer vom Infrarotsensor gemessenen Oberflächentemperatur aufweist, wobei das Verfahren die Schritte umfasst:
- Messen wenigstens eines Messwertes einer Oberflächentemperatur des Kalibrierelements mit Hilfe des Infrarotsensors,
- Bestimmen einer Abweichung zwischen dem wenigstens einen Messwert der Oberflächentemperatur des Kalibrierelements und dem vorbekannten Sollwert der Oberflächentemperatur des Kalibrierelements, und
- Korrigieren des wenigstens einen Messwerts der Oberflächentemperatur um die Höhe der bestimmten Abweichung auf Basis wenigstens zweier oder mehr der folgenden Werte: dem wenigstens einen Messwert der Oberflächentemperatur des Kalibrierelements, dem vorbekannten Sollwert der Oberflächentemperatur des Kalibrierelements und dem vorbekannten Emissionsgrad des Kalibrierelements.

Der Infrarotsensor ist bevorzugt fluiddicht durch die Schutzscheibe vom Garraum getrennt, dies ist jedoch nicht zwingend notwendig. Auch wenn das System nicht fluiddicht ist, wird das erfindungsgemäße Kalibriersystem benötigt, da sich trotzdem Schmutz auf der Scheibe absetzen kann.

Im Sinne der Erfindung ist ein Infrarotsensor, ein Bauteil, das geeignet ist, Infrarotstrahlung zu detektieren. Der Infrarotsensor kann einen Messpunkt bzw. Messpixel oder mehrere Messpunkte bzw. Messpixel aufweisen. Beispielsweise kann ein Infrarotsensor eine einzelne Photodiode oder eine eindimensionale oder zweidimensionale Anordnung (Array) von Photodioden sein, die sensitiv auf die Infrarotstrahlung ist.

Im Sinne der Erfindung ist ein Garraum ein bevorzugt mit einer Tür verschließbares Volumen, welches bevorzugt würfelartig oder quaderartig ausgestaltet ist. Der Garraum ist zur Zubereitung von Speisen z.B. durch direkte oder indirekte Hitze, elektromagnetische Strahlung wie z.B. Mikrowellenstrahlung oder Dampf geeignet und eingerichtet ist. Die Speisen werden zur Zubereitung in einen inneren Bereich des Garraums angeordnet und das entsprechende Garverfahren wird ausgeführt.

Im Sinne der Erfindung ist ein Küchengerät ein Gerät, welches zur Zubereitung von Speisen im inneren Bereich des Garraum verwendet werden kann. Ein Küchengerät kann bevorzugt ein Dialoggarer, ein Backofen, eine Mikrowelle oder ein Dampfgarer sein.

Der Garraum weist einen Infrarotsensor auf. Der Infrarotsensor ist durch eine verschmutzbare Schutzscheibe bevorzugt fluiddicht von einem inneren Bereich des Garraums getrennt. Fluiddicht bedeutet im Sinne der Erfindung, dass der Infrarotsensor durch die verschmutzbare Schutzscheibe wenigstens gegen Flüssigkeiten, bevorzugt aber gegen Flüssigkeiten und Gase von einem inneren Bereich des Garraums getrennt ist. Der Infrarotsensor kann dabei derart angeordnet sein, dass die Schutzscheibe mit einer Wand des Garraums fluchtend abschließt. Die Schutzscheibe kann alternativ auch in den Infrarotsensor integriert sein. Die Schutzscheibe schützt den Infrarotsensor vor einer direkten Verschmutzung des Infrarotsensors durch Fettspritzer oder Fettwrasen oder anderen Verschmutzungen. Die Schutzscheibe weist bevorzugt ein für Infrarotlicht transparentes bzw. zumindest teilweise durchlässiges Material auf. Ein zumindest teilweise durchlässiges Material kann im Sinne der Erfindung beispielsweise ein Material mit einer Transmission von bevorzugt mindestens 40% in dem gewünschten Wellenlängenbereich sein. Andere und ggf. auch niedrigere Werte der Transparenz bzw. Durchlässigkeit sind aber ebenso möglich. Ein mögliches Material für die Schutzscheibe ist Silizium, Chalkogenid, Zinksulfid oder ein geeigneter Kunststoff, der für die hohen Temperaturen während eines Garvorgangs geeignet ist und transparent oder zumindest teilweis für Infrarotstrahlung durchlässig ist.

Der Garraum weist ein Kalibrierelement mit einem vorbekannten Sollwert einer Oberflächentemperatur und einem vorbekannten Emissionsgrad auf. Ein Kalibrierelement ist im Sinne der Erfindung jedes Element, dessen Oberflächentemperatur und Emissionsgrad bekannt ist und dessen Oberflächentemperatur vom Infrarotsensor gemessen werden kann. Im Sinne der Erfindung beschreibt eine Oberflächentemperatur bzw. eine vorbekannte Oberflächentemperatur des Kalibrierelements eine Temperatur einer dem Infrarotsensor zugewandten und sichtbaren Seite des Kalibrierelements, so dass die Oberflächentemperatur des Kalibrierelements von dem Infrarotsensor messbar ist.

Der Schritt des Messens des wenigstens einen Messwerts kann entweder eine einzelne Messung sein. Alternativ kann der Schritt des Messens zwei oder mehr zeitlich aufeinander folgende Messungen, d.h. eine Messsequenz, umfassen. In diesem Fall kann die Messsequenz gemittelt werden und bspw. das arithmetische Mittel als Messwert in dem Schritt des Messens als Ergebnis verwendet werden.

Der Sollwert der Oberflächentemperatur im Schritt des Bestimmens einer Abweichung entspricht im Sinne der Erfindung den Oberflächentemperaturwert, den das Kalibrierelement tatsächlich aufweist. Der Schritt des Bestimmens einer Abweichung kann einen Fehlerbereich berücksichtigen. Beispielsweise ist denkbar, dass im Schritt des Bestimmens einer Abweichung zwischen dem wenigstens einen Messwert der Oberflächentemperatur des Kalibrierelements und dem vorbekannten Sollwert der Oberflächentemperatur des Kalibrierelements eine Abweichung nur bestimmt und/oder festgestellt wird, wenn der Messwert der Oberflächentemperatur mehr als 5 %, bevorzugt mehr als 4 %, weiter bevorzugt mehr als 3 % von dem Sollwert der Oberflächentemperatur abweicht.

Der Sollwert der Oberflächentemperatur kann entweder vor oder zu Beginn des Schritts des Bestimmens der Abweichung vorbekannt sein. Alternativ oder zusätzlich zur Überprüfung kann der Sollwert der Oberflächentemperatur vor oder zu Beginn des Schritts des Bestimmens und/oder während des Schritts des Bestimmens mittels einer zweiten, von dem Infrarotsensor bevorzugt unabhängigen Messtechnik gemessen werden. Beispielsweise kann die Oberflächentemperatur durch ein Thermoelement im Kalibrierelement, beispielsweise im thermischen Gleichgewicht nach einer vordefinierten Heizphase, gemessen werden. Ein Thermoelement ist im Sinne der Erfindung ein Bauteil, welches durch aufgrund des thermoelektrischen Effekts zur Temperaturmessung geeignet ist.

Im Sinne der Erfindung gibt der Emissionsgrad eines Körpers, z.B. des Kalibrierelements an, wie viel Strahlung das Kalibrierelement im Vergleich zu einem idealen Wärmestrahler, einem sogenannten schwarzen Körper, abgibt.

Das Korrigieren des wenigstens einen Messwerts kann beispielsweise durch Multiplikation, Division, Addition oder Subtraktion eines entsprechenden Korrekturfaktors erfolgen. Vorzugsweise erfolgt das Korrigieren des wenigstens einen Messwerts durch Multiplikation eines Korrekturfaktors, der größer eins ist. Der Korrekturfaktor kann beispielsweise die aufgrund der Verschmutzung der Schutzscheibe reduzierte Transmission von Infrarotstrahlung kompensieren.

Das erfindungsgemäße Verfahren gemäß dem ersten Aspekt der Erfindung hat den Vorteil, dass es eine technisch einfache Möglichkeit bietet, Messfehler des Infrarotsensors aufgrund einer verschmutzten Schutzscheibe zu korrigieren. Dadurch werden Fehler bei der Temperaturmessung von Objekten im Garraum vermieden. Zudem ist das erfindungsgemäße Verfahren technisch einfach umsetzbar und kann mit nur geringem Rechenaufwand schnell durchgeführt werden. Schließlich führt das erfindungsgemäße Verfahren zu einer deutlichen Verbesserung des Ergebnisses des Garvorgangs, da durch die korrigierte Messung der Oberflächentemperatur die Betriebsparameter des Küchengeräts während des Garvorgangs optimal angepasst werden können.

In einer bevorzugten Ausführungsform gemäß dem ersten Aspekt der Erfindung umfasst der Schritt des Korrigierens ein Speichern eines Korrekturfaktors, welcher geeignet ist, einen zeitlich nachfolgend aufgenommenen Messwert des Infrarotsensors ohne die Schritte des Messens und Bestimmens der Abweichung zu korrigieren.

Im Sinne der Erfindung beschreibt ein Speichern des Korrekturfaktors eine Datenspeicherung des Korrekturfaktors in einem vorzugsweise nicht-flüchtigem Datenspeicher. Beispielsweise kann dieser Datenspeicher in dem Küchengerät in einer Steuerungseinrichtung mit einem Mikrocontroller oder einem Mikroprozessor enthalten sein. Der Datenspeicher kann beispielsweise ein EEPROM- oder FLASH-Datenspeicher sein oder einen solchen umfassen.

Bei einer nachfolgenden Messung des Infrarotsensors ist der Korrekturfaktor bekannt und im Datenspeicher erneut abrufbar. Der gemessene Messwert der Oberflächentemperatur kann somit unmittelbar mittels des im Datenspeicher gespeicherten Korrekturfaktors korrigiert werden. Dies ermöglicht es, spätere Messungen der Oberflächentemperatur durch den Infrarotsensor schnell und einfach zu korrigieren, ohne das erfindungsgemäße Kalibrierverfahren erneut auszuführen. Zudem können so mit geringem technischem Aufwand korrekte Messergebnisse bereitgestellt werden.

In einer bevorzugten Ausführungsform gemäß dem ersten Aspekt der Erfindung umfasst der Schritt des Korrigierens des wenigstens einen Messwerts die folgenden Schritte:
- Bestimmen einer am Infrarotsensor eingegangenen Strahlungsleistung aus dem wenigstens einen Messwert der Oberflächentemperatur des Kalibierelements,
- Bestimmen eines Sollwerts einer Strahlungsleistung am Ort des Infrarotsensors aus der vorbekannten Oberflächentemperatur des Kalibrierelements und dem vorbekannten Emissionsgrad des Kalibrierelements,
- Bestimmen eines Transmissionsgrads einer Verschmutzung auf der Schutzscheibe aus der am Infrarotsensor eingegangenen Strahlungsleistung und dem Sollwert der Strahlungsleistung am Infrarotsensor,
- Anpassen des wenigstens einen Messwerts der Oberflächentemperatur um den Faktor des Transmissionsgrades.

Diese Schritte haben den Vorteil, dass durch sie aus wenigen bekannten Größen ein Korrekturfaktor zur Korrektur des wenigstens einen Messwerts bestimmt werden kann. Zudem gibt es lediglich eine veränderliche Größe, nämlich den Wert der eingegangenen Strahlungsleistung, wodurch die Schritte schnell und ressourceneffizient durchführbar sind.

In einer bevorzugten Ausführungsform gemäß dem ersten Aspekt der Erfindung wird das Verfahren einmalig zu Beginn eines Garvorgangs oder mehrmalig zu Beginn und/oder während des Garvorgangs ausgeführt.

Ein Garvorgang beschreibt im Sinne der Erfindung den Vorgang der Behandlung von Lebensmitteln in dem Garraum. Die Behandlung der Lebensmittel kann dabei beispielsweise über Wärme, elektromagnetische Strahlung und/oder Dampf erfolgen. Der Beginn des Garvorgangs ist im Sinne der Erfindung der Zeitpunkt unmittelbar nachdem ein Nutzer eine entsprechende Bedienungseinrichtung betätigt hat und das Küchengerät alle notwendigen Schritte für den Garvorgang veranlasst. Alternativ kann der Garvorgang auch der Zeitpunkt sein, zu dem nach einer vom Nutzer festgelegten Zeit oder zu einer festgelegten Zeit das Küchengerät alle notwendigen Schritte für den Garvorgang veranlasst.

Ein mehrmaliges Ausführen des erfindungsgemäßen Verfahrens kann periodisch in regelmäßigen Zeitintervallen erfolgen. Alternativ kann das mehrmalige Ausführen auch in unregelmäßigen Zeitintervallen vor und/oder während des Garvorgangs erfolgen. Es ist auch denkbar, dass das erfindungsgemäße Verfahren erstmalig vor dem Beginn des Garvorgangs ausgeführt wird und anschließend wenigstens einmal während des Garvorgangs ausgeführt wird.

Dies hat den Vorteil, dass während des Garvorgangs auftretende Verschmutzungen zeitnah erkannt werden können und die Temperaturmessung entsprechend zeitnah korrigiert werden kann. Dadurch wird der Erfolg des Garvorgangs unterstützt.

In einer bevorzugten Ausführungsform gemäß dem ersten Aspekt der Erfindung umfasst der Infrarotsensor eine Anordnung aus Messpixeln, wobei die Schritte des Messens, Bestimmens einer Abweichung und Korrigierens jeweils pixelweise für einen Messpixel, jeweils eine Gruppe von Messpixeln oder jeden Messpixel ausgeführt werden.

Eine Anordnung von Messpixeln kann beispielsweise eine zweidimensionale Anordnung von Messpixeln sein, vergleichbar mit dem Aufbau eines CCD-Sensors. Beispielsweise kann die Anordnung eine Matrix aus n mal n (quadratische Anordnung) oder n mal m (rechteckige Anordnung) Messpixel beschreiben, wobei n die Anzahl der Messpixel beschreibt. Ein Messpixel beschreibt dabei einen Messpunkt des Infrarotsensors. Beispielsweise kann ein Messpixel eine einzelne infrarotsensitive Photodiode sein.

Die Schritte des erfindungsgemäßen Verfahrens können bei einer im Infrarotsensor umfassten Anordnung von Messpixeln pro Messpixel sein:
- Messen wenigstens eines Messwertes einer Oberflächentemperatur des Kalibrierelements mit Hilfe eines Messpixels des Infrarotsensors,
- Bestimmen einer Abweichung zwischen dem wenigstens einen Messwert der Oberflächentemperatur des Kalibrierelements und dem vorbekannten Sollwert der Oberflächentemperatur des Kalibrierelements, und
- Korrigieren des wenigstens einen Messwerts der Oberflächentemperatur um die Höhe der bestimmten Abweichung auf Basis wenigstens zweier oder mehr der folgenden Werte: dem wenigstens einen Messwert der Oberflächentemperatur des Kalibrierelements, dem vorbekannten Sollwert der Oberflächentemperatur des Kalibrierelements und dem vorbekannten Emissionsgrad des Kalibrierelements.

Das erfindungsgemäße Verfahren kann für jeden Messpixel zeitgleich, d.h. parallel, oder nacheinander ausgeführt werden. Es kann aber auch Anwendungsfälle geben, in denen die Messwerte der Oberflächentemperatur über eine Gruppe von Messpixel bspw. gemittelt werden kann.

Weiterhin ist denkbar, dass der vorbekannte Sollwert der Oberflächentemperatur des Kalibrierelements ein einzelner Sollwert (Skalar) ist und den Sollwert für jeden Messpixel der Anordnung aus Messpixeln darstellt. Alternativ kann der vorbekannte Sollwert der Oberflächentemperatur des Kalibrierelements eine Matrix aus Sollwerten sein, beispielsweise mit derselben Dimension wie die Dimension der Anordnung des Messpixel. Dadurch kann jedem Messpixel ein individueller Sollwert zugeordnet werden.

Ein Infrarotsensor mit einer Anordnung aus Messpixeln hat den Vorteil, dass die Messung von Oberflächentemperaturen nicht nur als Mittelwert über den gesamten Sichtbereich des Infrarotsensors möglich ist, sondern eine Temperaturmessung für individuelle Bereiche im Garraum möglich ist.

In einer bevorzugten Ausführungsform gemäß dem ersten Aspekt der Erfindung ist der Infrarotsensor in einer Garraumdecke, einer Seitenwand, einer Ecke oder einer Tür des Garraums angeordnet.

Eine Garraumdecke ist im Sinne der Erfindung ein Bereich des Garraums, der dem Garraumboden gegenüberliegt. Der Garraumboden ist der Bereich des Garraums, auf dem Objekte, d.h. beispielsweise Behälter für Speisen, während des Garvorgangs angeordnet werden können. Durch eine Anordnung des Infrarotsensors in der Garraumdecke kann der Infrarotsensor die Oberflächentemperatur der Speisen während des Garvorgangs optimal messen. Auf Grundlage dieser Messungen sind Anpassungen der Betriebsparameter des Küchengeräts während des Garvorgangs möglich, was maßgeblich zum Erfolg des Garvorgangs beiträgt.

In einer bevorzugten Ausführungsform gemäß dem ersten Aspekt der Erfindung ist das Kalibrierelement eine Blende, die vor dem Schritt des Messens der Oberflächentemperatur vor die Schutzscheibe angeordnet wird.

Im Sinne der Erfindung ist eine Blende ein Objekt, welches geeignet ist, den Infrarotsensor hinter der Schutzscheibe oder die ganze Schutzscheibe bevorzugt vollständig abzudecken. Sowohl die Oberflächentemperatur der dem Infrarotsensor zugewandten Seite als auch der Emissionsgrad der Blende sind vorbekannt. Bevorzugt ist die Blende ein flaches Objekt. Die Blende kann beispielsweise vor den Infrarotsensor rotiert werden oder durch eine translatorische Bewegung oder einer Kombination aus Rotation und Translation vor die Scheibe gebracht werden.

Die Blende kann beispielsweise über einen Regelkreis beispielsweise im Zusammenspiel mit einem Thermocouple an der Blende geheizt werden, um so eine definierte Temperatur der Blende zu erreichen. Der im Regelkreis gemessene Wert kann in dem Fall den vorbekannten Sollwert der Oberflächentemperatur des Kalibrierelements im erfindungsgemäßen Verfahren darstellen.

Eine Blende hat den Vorteil, dass sie unmittelbar vor dem Infrarotsensor angeordnet werden kann. Sie kann damit leicht den Infrarotsensor abdecken, wodurch Fehlmessungen vermieden werden können. Zudem kann die Blende gleichzeitig als Schutz gegen Verschmutzungen der Scheibe dienen, wenn der Infrarotsensor nicht die Temperatur von Speisen im Garraum misst.

In einer bevorzugten Ausführungsform gemäß dem ersten Aspekt der Erfindung ist das Kalibrierelement ein Bereich des Garraums oder ist ein separates Element im Garraum.

Ein Beispiel für einen Bereich des Garraums kann ein Bereich des Bodens des Garraums sein. Beispielsweise ist dieser Bereich durch einen Behälter für Speisen während eines Garvorgangs nicht verdeckbar. Ein Beispiel für ein separates Element ist ein Element, welches für den Infrarotsensor sichtbar im Garraum angeordnet wird und z.B. zur Reinigung aus dem Garraum entfernt werden kann.

Da der Sichtbereich des Sensors relativ klein sein kann, ist es möglicherweise schwer, einen Bereich im Garraum als Kalibrierelement zu nutzen, der unter keinen Umständen vom Gargut abgedeckt wird. Der Sensor könnte daher alternativ auch gedreht oder gekippt werden bzw. dreh- oder kippbar ausgestaltet sein, sodass er auf einen Bereich gerichtet werden kann, wo definitiv oder zumindest mit hoher Wahrscheinlichkeit kein Gargut sein kann, z.B. in eine Ecke des Garraumbodens oder auf eine Garraumseitenwand.

Der Bereich des Garraums kann beispielsweise über einen Regelkreis selektiv und unabhängig von einem Garvorgang geheizt werden, um so eine definierte Temperatur des Bereichs zu erreichen. Der im Regelkreis beispielsweise über ein Thermoelement gemessene Wert der Oberflächentemperatur des Kalibrierelements kann in diesem Fall den vorbekannte Sollwert der Oberflächentemperatur des Bereichs des Garraums (und damit des Kalibrierelements) im erfindungsgemäßen Verfahren darstellen.

Das separate Element im Garraums kann beispielsweise über einen Regelkreis selektiv und unabhängig von einem Garvorgang geheizt werden, um so eine definierte Temperatur des Elements zu erreichen. Der im Regelkreis beispielsweise über ein Thermoelement gemessene Wert der Oberflächentemperatur des Kalibrierelements kann in dem Fall den Sollwert der Oberflächentemperatur des separaten Elements im Garraum (und damit des Kalibrierelements) im erfindungsgemäßen Verfahren darstellen.

Sowohl der Bereich des Garraums als auch das selektive Element haben den Vorteil, dass es bei einer Verschmutzung leicht zu reinigen ist. Zudem sind beide konstruktiv einfach umzusetzen.

In einer bevorzugten Ausführungsform gemäß dem ersten Aspekt der Erfindung wird ein Verschmutzungsgrad des Kalibrierelements vor dem Schritt des Messens der Oberflächentemperatur mittels einer in den Garraum schauenden Kamera bestimmt. Die Kamera kann auch eingesetzt werden, um sicherzustellen, dass der Kalibrierbereich leer ist.

Beispielsweise kann die Kamera benachbart zum Infrarotsensor angeordnet sein. Dies hat den Vorteil, dass die Kamera dieselbe bzw. nahezu dieselbe Blickrichtung wie der Infrarotsensor hat und somit insbesondere eine für den Infrarotsensor relevante Verschmutzung des Kalibrierelements detektieren kann.

In einer bevorzugten Ausführungsform gemäß dem ersten Aspekt der Erfindung wird bei Feststellen einer Überschreitung eines Schwellwerts des durch die Kamera bestimmten Verschmutzungsgrads des Kalibrierelements eine Hinweiseinrichtung betätigt, die einen Nutzer auf die notwendige Reinigung des Kalibrierelements hinweist.

Die Hinweiseinrichtung kann beispielsweise unmittelbar nach dem Erkennen des Überschreitens des Schwellwerts betätigt werden oder alternativ vor Beginn des Garvorgangs oder nach dem Ende des Garvorgangs. Der von der Hinweiseinrichtung gegebene Hinweis kann beispielsweise wenigstens eines oder mehrere der folgenden Mittel sein: eine Textnachricht, ein Piktogramm, ein akustisches Signal.

Die Hinweiseinrichtung kann beispielsweise eine Anzeige des Küchengeräts sein. Alternativ oder zusätzlich kann die Hinweiseinrichtung auch ein Mobilgerät wie z.B. ein Smartphone, eine Smartwatch oder ein Tablet-PC sein, welches jeweils mit einer entsprechenden Applikationssoftware ausgestattet ist und den Hinweis gibt.

Durch das Feststellen der Überschreitung eines Schwellwerts und dem Hinweis an den Nutzer bezüglich der notwendigen Reinigung des Kalibrierelements wird der ordnungsgemäße Ablauf eines Garvorgangs, einschließlich der Kalibrierung der gemessenen Temperaturen sichergestellt. Dies trägt zum Erfolg des Garvorgangs bei.

In einer bevorzugten Ausführungsform gemäß dem ersten Aspekt der Erfindung wird im Schritt des Bestimmens einer Abweichung eine Hinweiseinrichtung betätigt, wenn eine Abweichung zwischen der gemessenen Oberflächentemperatur des Kalibrierelements und dem vorbekannten Sollwert der Oberflächentemperatur des Kalibrierelements festgestellt wurde.

Die Hinweiseinrichtung kann beispielsweise unmittelbar nach einer erkannten Abweichung betätigt werden oder alternativ vor Beginn des Garvorgangs oder nach dem Ende des Garvorgangs. Der von der Hinweiseinrichtung gegebene Hinweis kann beispielsweise wenigstens eines oder mehrere der folgenden Mittel sein: eine Textnachricht, ein Piktogramm, ein akustisches Signal.

Die Hinweiseinrichtung kann beispielsweise eine Anzeige des Küchengeräts sein. Alternativ oder zusätzlich kann die Hinweiseinrichtung auch ein Mobilgerät wie z.B. ein Smartphone, eine Smartwatch oder ein Tablet-PC sein, welches mit einer entsprechenden Applikationssoftware ausgestattet ist und den Hinweis gibt. Die Hinweiseinrichtung kann dieselbe Hinweiseinrichtung sein, wie sie bereits im Zusammenhang mit der Gabe eines Hinweises zur Reinigung des Kalibrierelements beschrieben wurde. Die Hinweiseinrichtung kann jedoch auch eine separate, unabhängige zweite Hinweiseinrichtung sein.

Dies ermöglicht es, dem Nutzer automatisch eine notwendige Reinigung anzuzeigen.

In einer bevorzugten Ausführungsform gemäß dem ersten Aspekt der Erfindung informiert die Hinweiseinrichtung während oder nach einem Beenden des Garvorgangs den Nutzer über die Notwendigkeit einer Reinigung der Schutzscheibe.

Durch das Informieren des Nutzers bezüglich der notwendigen Reinigung der Schutzscheibe kann die Reinigung zeitnah nach dem Garvorgang erfolgen und das Küchengerät ist vor dem nächsten Garvorgang wieder einsatzbereit.

In einem zweiten Aspekt der Erfindung wird das Problem gemäß Anspruch 13 durch ein Küchengerät mit einem Garraum, gelöst, wobei der Garraum einen Infrarotsensor aufweist, der bevorzugt fluiddicht durch eine verschmutzbare Schutzscheibe von einem inneren Bereich des Garraums getrennt ist, wobei der Garraum ein Kalibrierelement mit einem vorbekannten Sollwert einer Oberflächentemperatur und einem vorbekannten Emissionsgrad zur Kalibrierung einer vom Infrarotsensor gemessenen Oberflächentemperatur aufweist, wobei das Küchengerät eingerichtet ist, dass erfindungsgemäße Verfahren gemäß einem der Ansprüche 1 bis 12 auszuführen.

Die im Rahmen des ersten Aspekts der Erfindung gemachten Ausführungen gelten ebenso für das Küchengerät gemäß dem zweiten Aspekt der Erfindung. Zur Vermeidung von unnötigen Redundanzen wird daher an dieser Stelle auf eine erneute Wiedergabe verzichtet und auf die entsprechenden vorangegangenen Stellen verwiesen.

Das Küchengerät gemäß dem zweiten Aspekt der Erfindung hat dieselben Vorteile wie das erfindungsgemäße Verfahren gemäß dem ersten Aspekt der Erfindung. Zudem wird eine Vorrichtung für eine optimale Zubereitung von Speisen bereitgestellt.

In einer bevorzugten Ausführungsform gemäß dem zweiten Aspekt der Erfindung ist das Küchengerät ein Dialoggarer, ein Backofen, eine Mikrowelle, ein Dampfgarer oder eine Kombination aus diesen Geräten.

Diese Küchengeräte haben den Vorteil, dass eine Messung der Oberflächentemperatur die Zubereitung von Speisen in diesen Geräten deutlich verbessern kann, da alle Küchengeräte einen verschließbaren Garraum umfassen und mit genau definierten, jedoch während des Garvorgangs änderbaren Betriebsparametern betrieben werden.

In einem dritten Aspekt der Erfindung wird das Problem gemäß Anspruch 15 durch ein Verfahren zum Messen einer Oberflächentemperatur mit oder in einem erfindungsgemäßen Küchengerät mit einem Infrarotsensor nach Anspruch 13 oder 14 gelöst, wobei die Schutzscheibe verschmutzt ist, wobei das Verfahren die Schritte umfasst:
- Messen wenigstens eines Messwertes einer Oberflächentemperatur eines Objekts im Garraum mit Hilfe des Infrarotsensors, und
- Korrigieren des wenigstens einen Messwerts mit Hilfe des gespeicherten Korrekturfaktors gemäß einem der Ansprüche 2 bis 12.

Die im Rahmen des ersten und zweiten Aspekts der Erfindung gemachten Ausführungen gelten ebenso für das Verfahren zum Messen einer Oberflächentemperatur gemäß dem dritten Aspekt der Erfindung. Zur Vermeidung von unnötigen Redundanzen wird daher an dieser Stelle auf eine erneute Wiedergabe verzichtet und auf die entsprechenden vorangegangenen Stellen verwiesen.

Ein Objekt im Garraum kann beispielsweise ein Behälter für Speisen oder eine Speise selbst sein.

Das erfindungsgemäße Verfahren gemäß dem dritten Aspekt der Erfindung hat den Vorteil, dass es eine schnelle Messung der (korrigierten) korrekten Oberflächentemperatur z.B. von Speisen ermöglicht. Damit ermöglicht das erfindungsgemäße Verfahren gemäß dem dritten Aspekt der Erfindung einen optimalen Garvorgang und trägt maßgeblich zu einem optimalen Garergebnis bei.

Es sei hiermit klargestellt, dass eine oder mehrere der oben beschriebenen bevorzugten Ausführungsformen, soweit widerspruchsfrei, miteinander kombinierbar sind und ebenfalls bevorzugte Ausführungsformen darstellen.

Ein Ausführungsbeispiel der Erfindung ist in den Zeichnungen rein schematisch dargestellt und wird nachfolgend näher beschrieben. Dabei zeigt
- Figur 1: ein erfindungsgemäßes Küchengerät,
- Figur 2: eine Schnittansicht durch das erfindungsgemäße Küchengerät aus Figur 1, welche eine Anordnung mit einem Infrarotsensor in einer Garraumdecke zeigt,
- Figur 3: eine Detailansicht eines beispielhaften Aufbaus des Infrarotsensors in der Wand des Garraums in dem erfindungsgemäßen Küchengerät aus Figur 1 und 2,
- Figur 4: eine Detailansicht eines weiteren beispielhaften Aufbaus des Infrarotsensors mit einer rotierbaren Blende in der Wand des Garraums in dem erfindungsgemäßen Küchengerät aus Figur 1 und 2.

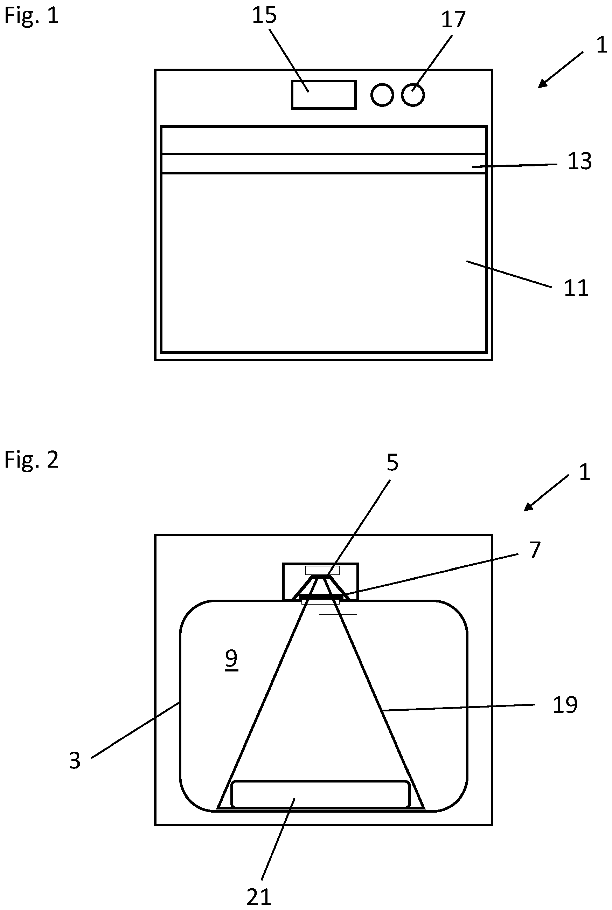

Figur 1 zeigt eine Ausführungsform eines erfindungsgemäßen Küchengeräts 1, Fig. 2 zeigt eine Schnittansicht durch das erfindungsgemäße Küchengerät 1 aus Figur 1. Das Küchengerät 1 kann beispielsweise ein Dialoggarer, ein Backofen, eine Mikrowelle oder ein Dampfgarer sein.

Das Küchengerät 1 hat einen Garraum 3. Der Garraum 3 weist wiederum einen Infrarotsensor 5 auf. Der Infrarotsensor 5 ist durch eine verschmutzbare Schutzscheibe 7 von einem inneren Bereich 9 des Garraums 3 getrennt.

Der Garraum 3 des Küchengeräts 1 ist durch eine Tür 11 mit einem Griff 13 verschließbar. Zudem umfasst das Küchengerät 1 eine Hinweiseinrichtung 15 sowie Bedienelemente 17.

Der Infrarotsensor 5 hat einen Blickwinkel 19. Der Blickwinkel 19 kann allgemein fest sein oder durch eine im Betrieb änderbare, z.B. automatisch änderbare Optik einstellbar sein. In Fig. 2 ist der Blickwinkel 19 optimal auf den Behälter 21 für Speisen angepasst.

Der Garraum 3 umfasst ebenfalls ein Kalibierelement (in Fig. 2 nicht gezeigt) mit einem vorbekannten Sollwert einer Oberflächentemperatur und einem vorbekannten Emissionsgrad zur Kalibrierung einer vom Infrarotsensor 5 gemessenen Oberflächentemperatur.

Das Küchengerät in Fig. 1 und 2 ist eingerichtet, Messwerte des Infrarotsensors 5 in dem Küchengerät 1 wie folgt zu kalibrieren:
- Messen wenigstens eines Messwertes einer Oberflächentemperatur des Kalibrierelements mit Hilfe des Infrarotsensors 5,
- Bestimmen einer Abweichung zwischen dem wenigstens einen Messwert der Oberflächentemperatur des Kalibrierelements und dem vorbekannten Sollwert der Oberflächentemperatur des Kalibrierelements, und
- Korrigieren des wenigstens einen Messwerts der Oberflächentemperatur um die Höhe der bestimmten Abweichung auf Basis wenigstens zweier oder mehr der folgenden Werte: dem wenigstens einen Messwert der Oberflächentemperatur des Kalibrierelements, dem vorbekannten Sollwert der Oberflächentemperatur des Kalibrierelements und dem vorbekannten Emissionsgrad des Kalibrierelements.

Bevorzugt umfasst der Schritt des Korrigierens im erfindungsgemäßen Kalibrierverfahren ein Speichern eines Korrekturfaktors. Der Korrekturfaktor ist geeignet, einen zeitlich nachfolgend aufgenommenen Messwert des Infrarotsensors 5 ohne die Schritte des Messens und Bestimmens der Abweichung zu korrigieren.

Mit Hilfe des gespeicherten Korrekturfaktors kann das Messen einer Oberflächentemperatur eines Objekts, z. B. eines Behälters 21 für Speisen bzw. die Speisen in dem Behälter 21, mit dem Infrarotsensor 5 mit einer verschmutzten Schutzscheibe 7 in dem erfindungsgemäßen Küchengerät 1 erfindungsgemäß wie folgt durchgeführt werden:
- Messen wenigstens eines Messwertes einer Oberflächentemperatur eines Objekts im Garraum 3 mit Hilfe des Infrarotsensors 5, und
- Korrigieren des wenigstens einen Messwerts mit Hilfe des gespeicherten Korrekturfaktors.

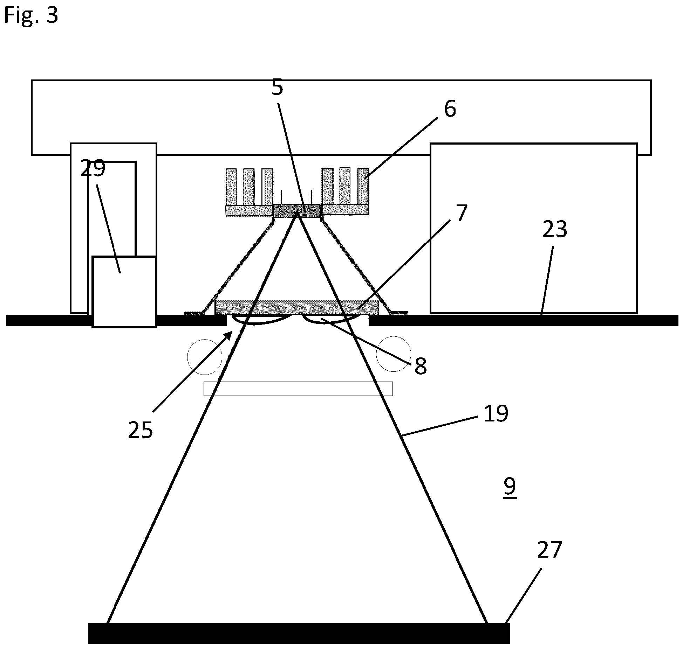

Figur 3 zeigt eine Detailansicht eines beispielhaften Aufbaus des Infrarotsensors in der Wand des Garraums, beispielsweise eine Garraumdecke, in dem erfindungsgemäßen Küchengerät aus Figur 1 und 2. Der Infrarotsensor 5 ist benachbart zur Garraumwand 23 angeordnet und weist zur verbesserten Kühlung des Infrarotsensors 5 Kühlrippen 6 auf. Eine Öffnung 25 in der Garraumwand 23 ermöglicht die Sicht auf den inneren Bereich 9 des Garraums 3. Die Öffnung 25 ist durch die Schutzscheibe 7 verschlossen. Der Infrarotsensor 5 ist dadurch vom inneren Bereich 9 des Garraums 3 geschützt. Die Schutzscheibe in Fig. 3 weist eine Verschmutzung 8 auf.

Figur 3 zeigt zudem ein Kalibierelement 27 mit einem vorbekannten Emissionsgrad und, während der Durchführung des erfindungsgemäßen Kalibrierverfahrens, einer vorbekannten Oberflächentemperatur der dem Infrarotsensor 5 zugewandten Seite.

Das Kalibrierelement 27 kann beispielsweise ein Bereich des Garraums 3 sein oder ein separates Element im Garraum 3 sein.

Der Aufbau in Fig. 3 umfasst zudem eine in den Garraum 3 schauende Kamera 29. Die Kamera 29 ist eingerichtet, das Kalibrierelement 27 vollständig abzubilden. Mit Hilfe der Kamera 29 ist ein Verschmutzungsgrad des Kalibrierelements 27 bestimmbar. Der Verschmutzungsgrad des Kalibrierelements 27 kann beispielsweise vor dem Schritt des Messens der Oberflächentemperatur durchgeführt werden. Wird eine Überschreitung eines Schwellwerts des durch die Kamera 29 bestimmten Verschmutzungsgrads des Kalibrierelements 27 festgestellt, wird die Hinweiseinrichtung 15 in Figur 1 betätigt. Die Hinweiseinrichtung weist einen Nutzer auf eine notwendige Reinigung des Kalibrierelements 27 hin.

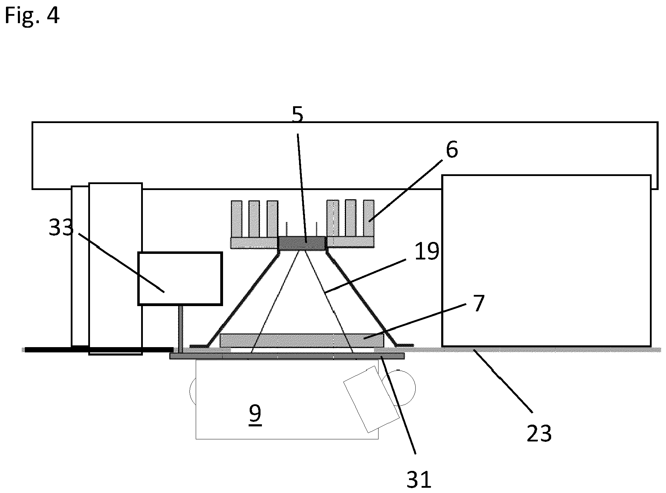

Figur 4 zeigt eine alternative Ausführungsform des Aufbaus in Fig. 3 mit einem Kalibrierelement, welches als Blende 31, die beispielsweise rotierbar ist, ausgebildet ist. Alternativ könnte die Blende 31 auch verschiebbar oder rotier- und verschiebbar sein. Die Blende 31 wird mit Hilfe eines Stellelements 33, beispielsweise einem Elektromotor, vor die Schutzscheibe 7 angeordnet. Die Blende 31 deckt die Schutzscheibe 7 und damit den Infrarotsensor 5 vollständig ab. Analog zu dem Kalibrierelement in Fig. 3 ist der Emissionsgrad der Blende sowie die Oberflächentemperatur der dem Infrarotsensor 5 zugewandten Seite der Blende 31 beim Durchführen des erfindungsgemäßen Kalibrierverfahrens bekannt.

Vor der Durchführung des erfindungsgemäßen Kalibrierverfahrens wird die Blende 31 durch das Stellelement 33 vor die Schutzscheibe 7 bzw. den Infrarotsensor 5 verfahren. Anschließend wird das erfindungsgemäße Kalibrierverfahren durchgeführt.

## Patentansprüche

1. Verfahren zum Kalibrieren wenigstens eines Messwerts eines Infrarotsensors (5) in einem Küchengerät (1) mit einem Garraum (3),
wobei der Garraum (3) einen Infrarotsensor (5) aufweist, der durch eine verschmutzbare Schutzscheibe (7) von einem inneren Bereich (9) des Garraums (3) getrennt ist,
wobei der Garraum (3) ein Kalibrierelement (27) mit einem vorbekannten Sollwert einer Oberflächentemperatur und einem vorbekannten Emissionsgrad zur Kalibrierung einer vom Infrarotsensor (5) gemessenen Oberflächentemperatur aufweist,
wobei das Verfahren die Schritte umfasst:
- Messen wenigstens eines Messwertes einer Oberflächentemperatur des Kalibrierelements (27) mit Hilfe des Infrarotsensors (5),
- Bestimmen einer Abweichung zwischen dem wenigstens einen Messwert der Oberflächentemperatur des Kalibrierelements (27) und dem vorbekannten Sollwert der Oberflächentemperatur des Kalibrierelements (27), und
- Korrigieren des wenigstens einen Messwerts der Oberflächentemperatur um die Höhe der bestimmten Abweichung auf Basis wenigstens zweier oder mehr der folgenden Werte: dem wenigstens einen Messwert der Oberflächentemperatur des Kalibrierelements (27), dem vorbekannten Sollwert der Oberflächentemperatur des Kalibrierelements (27) und dem vorbekannten Emissionsgrad des Kalibrierelements (27).

2. Verfahren gemäß Anspruch 1, wobei der Schritt des Korrigierens ein Speichern eines Korrekturfaktors umfasst, welcher geeignet ist, einen zeitlich nachfolgend aufgenommenen Messwert des Infrarotsensors (5) ohne die Schritte des Messens und Bestimmens der Abweichung zu korrigieren.

3. Verfahren gemäß einem der Ansprüche 1 oder 2, wobei der Schritt des Korrigierens des wenigstens einen Messwerts die folgenden Schritte umfasst:
- Bestimmen einer am Infrarotsensor (5) eingegangenen Strahlungsleistung aus dem wenigstens einen Messwert der Oberflächentemperatur des Kalibierelements (27),
- Bestimmen eines Sollwerts einer Strahlungsleistung am Ort des Infrarotsensors (5) aus der vorbekannten Oberflächentemperatur des Kalibrierelements (27) und dem vorbekannten Emissionsgrad des Kalibrierelements (27),
- Bestimmen eines Transmissionsgrads einer Verschmutzung (8) auf der Schutzscheibe (7) aus der am Infrarotsensor (5) eingegangenen Strahlungsleistung und dem Sollwert der Strahlungsleistung am Infrarotsensor (5),
- Anpassen des wenigstens einen Messwerts der Oberflächentemperatur um den Faktor des Transmissionsgrades.

4. Verfahren gemäß einem der Ansprüche 1 bis 3, wobei das Verfahren einmalig zu Beginn eines Garvorgangs oder mehrmalig zu Beginn und/oder während des Garvorgangs ausgeführt wird.

5. Verfahren gemäß einem der Ansprüche 1 bis 4,
wobei der Infrarotsensor (5) eine Anordnung aus Messpixeln umfasst,
wobei die Schritte des Messens, Bestimmens einer Abweichung und Korrigierens jeweils pixelweise für einen Messpixel, jeweils eine Gruppe von Messpixeln oder jeden Messpixel ausgeführt werden.

6. Verfahren gemäß einem der Ansprüche 1 bis 5, wobei der Infrarotsensor (5) in einer Garraumdecke, einer Seitenwand, einer Ecke oder einer Tür des Garraums (3) angeordnet ist.

7. Verfahren gemäß einem der Ansprüche 1 bis 6, wobei das Kalibrierelement (27) eine Blende (31) ist, die vor dem Schritt des Messens der Oberflächentemperatur vor die Schutzscheibe (7) angeordnet wird.

8. Verfahren gemäß einem der Ansprüche 1 bis 6, wobei das Kalibrierelement (27) ein Bereich des Garraums (3) ist oder ein separates Element im Garraum (3) ist.

9. Verfahren gemäß einem der Ansprüche 1 bis 8, wobei ein Verschmutzungsgrad des Kalibrierelements (27) vor dem Schritt des Messens der Oberflächentemperatur mittels einer in den Garraum (3) schauenden Kamera (29) bestimmt wird.

10. Verfahren gemäß Anspruch 9, wobei bei Feststellen einer Überschreitung eines Schwellwerts des durch die Kamera (29) bestimmten Verschmutzungsgrads des Kalibrierelements (27) eine Hinweiseinrichtung (15) betätigt wird, die einen Nutzer auf die notwendige Reinigung des Kalibrierelements (27) hinweist.

11. Verfahren gemäß einem der Ansprüche 1 bis 10, wobei im Schritt des Bestimmens einer Abweichung eine Hinweiseinrichtung (15) betätigt wird, wenn eine Abweichung zwischen der gemessenen Oberflächentemperatur des Kalibrierelements (27) und dem vorbekannten Sollwert der Oberflächentemperatur des Kalibrierelements (27) festgestellt wurde.

12. Verfahren gemäß einem der Ansprüche 1 bis 11, wobei die Hinweiseinrichtung (15) während oder nach einem Beenden des Garvorgangs den Nutzer über die Notwendigkeit einer Reinigung der Schutzscheibe (7) informiert.

13. Küchengerät (1) mit
einem Garraum (3),
wobei der Garraum (3) einen Infrarotsensor (5) aufweist, der durch eine verschmutzbare Schutzscheibe (7) von einem inneren Bereich (9) des Garraums (3) getrennt ist,
wobei der Garraum (3) ein Kalibrierelement (27) mit einem vorbekannten Sollwert einer Oberflächentemperatur und einem vorbekannten Emissionsgrad zur Kalibrierung einer vom Infrarotsensor (5) gemessenen Oberflächentemperatur aufweist, wobei das Küchengerät (1) eingerichtet ist, dass Verfahren gemäß einem der Ansprüche 1 bis 12 auszuführen.

14. Küchengerät (1) gemäß Anspruch 13, wobei das Küchengerät (1) ein Dialoggarer, ein Backofen, eine Mikrowelle oder ein Dampfgarer ist.

15. Verfahren zum Messen einer Oberflächentemperatur mit oder in einem Küchengerät (1) mit einem Infrarotsensor (5) nach Anspruch 13 oder 14, wobei die Schutzscheibe (7), verschmutzt ist, umfassend die Schritte:
- Messen wenigstens eines Messwertes einer Oberflächentemperatur eines Objekts im Garraum (3) mit Hilfe des Infrarotsensors (5), und
- Korrigieren des wenigstens einen Messwerts mit Hilfe des gespeicherten Korrekturfaktors gemäß einem der Ansprüche 2 bis 12.
